# EUROPEAN PATENT APPLICATION

(11) **EP 4 156 092 A1**
(43) Date of publication of application: **29.03.2023**
(21) Application number: 21809682.4
(22) Date of filing: 15.03.2021
(51) Int. Cl.: G06T 7/00

(54) **IMAGE CLASSIFICATION DEVICE, IMAGE CLASSIFICATION METHOD, AND IMAGE CLASSIFICATION PROGRAM**

(30) Priority: 21.05.2020 JP 2020088815
(71) Applicant: IHI Corporation, Tokyo 135-8710 (JP)
(72) Inventor: HATTORI, Hitoshi, Tokyo 135-8710 (JP); KURIBARA, Masaya, Tokyo 135-8710 (JP); YONEKURA, Kazuo, Tokyo 135-8710 (JP); TOKUNAGA, Koji, Tokyo 135-8710 (JP)
(74) Representative: MERH-IP Matias Erny Reichl Hoffmann Patentanwälte PartG mbB
(86) International application number: PCT/JP2021/010287
(87) International publication number: WO 2021/235061

(57) **Abstract**

An image classification device, an image classification method, and an image classification program determine a classification label of an image of an object, by two-stage recognition based on a first model and a second model. If a first label calculated based on the image and the first model is not a predetermined label, the first label is set as the classification label of the image. If the first label is the predetermined label, a second label calculated based on the image and the second model is set as the classification label of the image.

## Description

### TECHNICAL FIELD

The present invention relates to an image classification device, an image classification method, and an image classification program.

### BACKGROUND ART

Patent Literature 1 discloses a system capable of constructing a database of image data by a user grouping captured images while referring to the captured images.

### CITATION LIST

### PATENT LITERATURE

Patent Literature 1: Japanese Patent Laid-Open Publication No. 2005-4564

### SUMMARY OF THE INVENTION

### TECHNICAL PROBLEM

However, when trying to classify images of components after disassembling an aircraft engine, etc. by using the technique disclosed in Patent Literature 1, it takes enormous time and cost required for the classification work of the captured images.

More specifically, there are many similar parts in components constituting such as aircraft engines, and it is difficult to improve the accuracy of classification of images obtained by capturing images of the components unless detailed features are confirmed. Therefore, there has been a problem that it takes time and cost to classify the captured images. In addition, there has been a problem that it takes time and cost to train workers who are proficient in the work of classifying captured images of components such as aircraft engines.

The present disclosure has been made to solve such a problem. An object of the present disclosure is to provide an image classification device, an image classification method, and an image classification program capable of automating the classification work of images of similar components, which is difficult to improve the accuracy of classification without confirming the detailed features of the components, and capable of reducing the work time and cost in the classification work.

### SOLUTION TO PROBLEM

An image classification device according to one aspect of the present disclosure includes a receiver configured to receive an image obtained by capturing an image of an object, and a controller configured to determine a classification label of the image, based on a first model and a second model. Here, the first model is a model generated based on a first teacher data which is a set of a classified image and the classification label of the classified image. The second model is a model generated based on a second teacher data which is a set of the classified image, the classification label of the classified image, and a region set in the classified image. The controller calculates a first label based on the image and the first model, and determines whether the first label is a predetermined label. Then, when the first label is not the predetermined label, the controller sets the first label as the classification label of the image. On the other hand, when the first label is the predetermined label, the controller calculates a second label based on the image and the second model, and sets the second label as the classification label of the image.

The second model may be a model generated only based on the second teacher data in which the classification label of the classified image is the predetermined label.

The classification label of the classified image whose correct answer rate is equal to or less than a predetermined threshold value may be set as the predetermined label. Here, a label calculated based on the classified image and the first model is set as a reproduction label, and a percentage of matching of the reproduction label and the classification label of the classified image may be set as the correct answer rate. Here, the percentage of matching is calculated for each classification label of the classified image.

The first model may be a model generated by machine learning based on the first teacher data.

The region may be a region of the image, in which a characteristic portion of the object is included.

The second model may be a model that estimates the region from the image using a detection algorithm.

The detection algorithm may include at least one of an object detection method and Semantic Segmentation. For example, the object detection method may be Faster R-CNN (Regions with Convolutional Neural Networks), YOLO (You Only Look None), SSD (Single Shot MultiBox Detector.

The object may be a component constituting a machine.

The machine may be, for example, an aircraft engine.

An image classification method according to one aspect of the present disclosure determines a classification label of an image obtained by capturing an image of an object, based on a first model and a second model. Here, the first model is a model generated based on a first teacher data which is a set of a classified image and the classification label of the classified image. The second model is a model generated based on a second teacher data which is a set of the classified image, the classification label of the classified image, and a region set in the classified image. The image classification method calculates a first label based on the image and the first model, and determines whether the first label is a predetermined label. Then, when the first label is not the predetermined label, the image classification method sets the first label as the classification label of the image. On the other hand, when the first label is the predetermined label, the image classification method calculates a second label based on the image and the second model, and sets the second label as the classification label of the image.

An image classification program according to one aspect of the present disclosure determines a classification label of an image obtained by capturing an image of an object, based on a first model and a second model. Here, the first model is a model generated based on a first teacher data which is a set of a classified image and the classification label of the classified image. The second model is a model generated based on a second teacher data which is a set of the classified image, the classification label of the classified image, and a region set in the classified image. The image classification program causes a computer to calculate a first label based on the image and the first model, and to determine whether the first label is a predetermined label. Then, when the first label is not the predetermined label, the image classification program causes a computer to set the first label as the classification label of the image. On the other hand, when the first label is the predetermined label, the image classification program causes a computer to calculate a second label based on the image and the second model, and to set the second label as the classification label of the image.

### ADVANTAGEOUS EFFECTS OF INVENTION

According to the present disclosure, it is possible to automate the classification work of images of similar components, which is difficult to improve the accuracy of classification without confirming the detailed features of the components, and it is possible to reduce the work time and cost in the classification work.

### BRIEF DESCRIPTION OF DRAWINGS

[Fig. 1] Fig. 1 is a block diagram showing a configuration of an image classification device according to an embodiment.
[Fig. 2] Fig. 2 is a flowchart showing a procedure of image classification.
[Fig. 3A] Fig. 3A is a figure typically expressing an image of a fan rotor.
[Fig. 3B] Fig. 3B is a figure typically expressing an image of an inlet cone.
[Fig. 3C] Fig. 3C is a figure typically expressing an image of a first inner shroud.
[Fig. 3D] Fig. 3D is a figure typically expressing an image of a second inner shroud.

### DESCRIPTION OF EMBODIMENTS

Hereinafter, some exemplary embodiments will be described with reference to the drawings. In addition, the same reference numerals are given to common parts in each figure, and duplicate description is omitted.

### [Structure of image classification device]

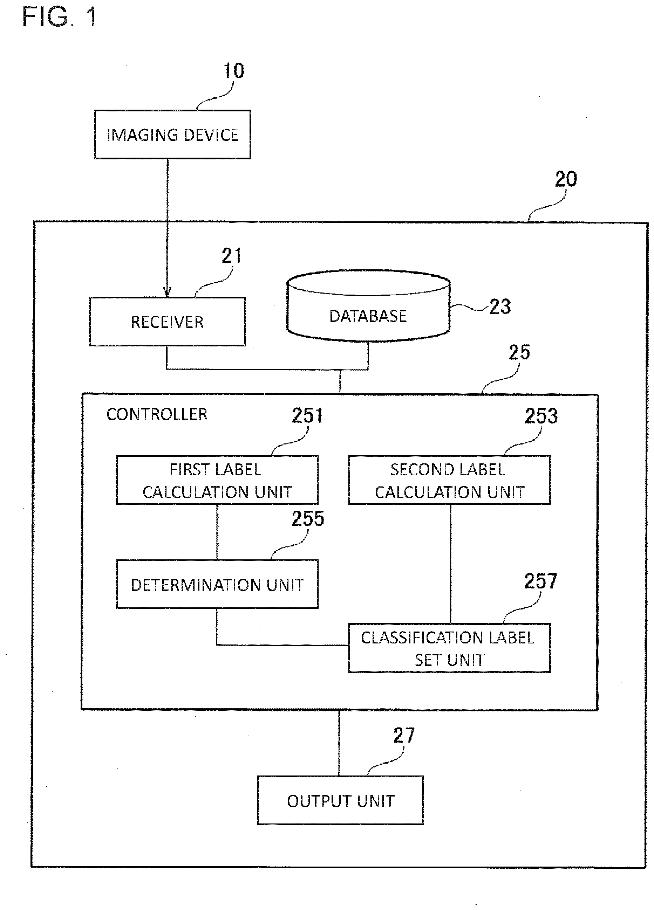

Fig. 1 is a block diagram showing a configuration of an image classification device. As shown in Fig. 1, the image classification device 20 includes a receiver 21, a database 23, a controller 25, and an output unit 27. The controller 25 is connected to the receiver 21, the database 23, and the output unit 27, so as to be able to communicate with the receiver 21, the database 23, and the output unit 27.

In addition, the output unit 27 may be provided by the image classification device 20 itself, or may be installed outside the image classification device 20 and connected to the image classification device 20 by a wireless or wired network.

The receiver 21 is connected wirelessly or by wire to an imaging device 10 so as to be able to communicate with the imaging device 10. The receiver 21 receives an image of an object captured by the imaging device 10. In addition, the receiver 21 may receive a time stamp indicating the date and time when the image was acquired together with the image.

Further, the database 23 may record a first teacher data and a second teacher data for an image for which a classification label has already been set by a method different from that of the image classification device 20 (hereinafter referred to as the classified image). Here, the first teacher data is a set of a classified image and the classification label of the classified image. Further, the second teacher data is a set of the classified image, the classification label of the classified image, and a region set in the classified image.

The image classification label is a label set for the image and represents a group to which the image belongs. For example, the classification label is a name of the object that appears in the image. If the object in the image is a component of the machine, the classification label may be a name of the component of the machine. More specifically, when the object shown in the image is a component constituting the aircraft engine, the classification label may be a name of the component constituting the aircraft engine. Various names of components constituting an aircraft engine include, for example, a fan rotor, an inlet cone, an inner shroud, a blade, and the like. The names of the objects in the image, especially the names of the components constituting the aircraft engine, are not limited to the examples given here.

The region set in the image is a region set on the image, and is a region of the image, in which the characteristic portion of the object on the image is included. The region set in the image may be a region composed of only the pixels corresponding to the characteristic portion of the object on the image. The region set in the image may be a region including pixels corresponding to the characteristic portion of the object on the image. The region set in the image may be a rectangular region including pixels corresponding to the characteristic portion of the object on the image. The region set in the image may be a region having a polygon having a plurality of vertices as a boundary.

The characteristic portion of an object is a portion that distinguishes the object from other objects. That is, the characteristic portion of the object of interest is a dissimilar portion between the object of interest and an object other than the object of interest.

In addition, the second teacher data may be composed only of data in which the classification label of the classified image is a predetermined label. The predetermined label will be described later.

In addition, the database 23 may record an image received by the receiver 21. Further, the database 23 may record the first model and the second model described later.

The output unit 27 outputs information generated by the controller 25, which will be described later. In particular, the output unit 27 outputs the classification label set for each image by the controller 25 to the user or the like.

For example, the output unit 27 may be a display that presents information to the user by displaying figures and characters by combining a plurality of display pixels. The output unit 27 may be a speaker that notifies the user of information by voice. The method of outputting information by the output unit 27 is not limited to the examples given here.

The controller 25 (control unit) is a general-purpose computer including a CPU (central processing unit), a memory, and an input / output unit. A computer program (image classification program) for functioning as the image classification device 20 is installed in the controller 25. By executing the computer program, the controller 25 functions as a plurality of information processing circuits (251, 253, 255, 257) included in the image classification device 20. The computer program (image classification program) may be stored in a non-transitory computer-readable storage medium that can be read and written by a computer.

The present disclosure shows an example of realizing a plurality of information processing circuits (251, 253, 255, 257) by software. However, it is also possible to configure an information processing circuit (251, 253, 255, 257) by preparing dedicated hardware for executing each of the following information processing. Further, a plurality of information processing circuits (251, 253, 255, 257) may be configured by individual hardware. Further, the information processing circuit (251, 253, 255, 257) may also be used as a control unit used for monitoring or controlling the imaging device 10.

As shown in Fig. 1, the controller 25 includes a first label calculation unit 251, a second label calculation unit 253, a determination unit 255, and a classification label set unit 257, as a plurality of information processing circuits (251, 253, 255, 257).

The first label calculation unit 251 performs "learning" based on the first teacher data, and then performs "estimation" of the label based on the image in which the classification label is not set. Similarly, the second label calculation unit 253 performs "learning" based on the second teacher data, and then performs "estimation" of the label based on the image to which the classification label is not set.

First, "learning" in the first label calculation unit 251 and the second label calculation unit 253 will be described.

The first label calculation unit 251 performs machine learning based on the first teacher data and generates the first model. On the other hand, the second label calculation unit 253 performs machine learning based on the second teacher data and generates the second model. The generated first model and the second model may be those stored in the database 23.

Specifically, the first label calculation unit 251 and the second label calculation unit 253 generate the first model and the second model, respectively, using a neural network.

The first label calculation unit 251 generates the first model by using a first neural network which an image is input to and a label is output from. At that time, the first label calculation unit 251 calculates an error between the label obtained when the classified image is input to the first neural network and the classification label corresponding to the input classified image.

Then, the first label calculation unit 251 adjusts parameters that define the first neural network so that the error is minimized, and learns the feature expressing the first teacher data. The first model is represented by the first neural network.

On the other hand, the second label calculation unit 253 generates the second model by using a second neural network which an image is input to and a label and a region information (information indicating the region set on the image) are output from. At that time, the second label calculation unit 253 calculates an error between the label obtained when the classified image is input to the second neural network and the classification label corresponding to the input classified image.

Further, the second label calculation unit 253 calculates an error between the region information obtained when the classified image is input to the second neural network and the region information set in the input classified image.

Then, the second label calculation unit 253 adjusts parameters that define the second neural network so that the error related to the label and the error related to the region information are minimized, and learns the feature expressing the second teacher data. The second model is represented by the second neural network.

The second label calculation unit 253 may calculate the region information from the image input to the second neural network by using a detection algorithm. That is, the second model generated by the second label calculation unit 253 may be a model that estimates the region from the image using the detection algorithm.

Examples of the detection algorithm include an object detection method or Semantic Segmentation. Examples of the object detection method include Faster R-CNN (Regions with Convolutional Neural Networks), YOLO (You Only Look Noise), SSD (Single Shot MultiBox Detector), and the like. In addition, examples of the detection algorithm include those containing these algorithms internally. The detection algorithm is not limited to the examples given here.

For example, the above-mentioned neural network includes an input layer into which an image is input, an output layer in which an output value is output, and at least one hidden layer provided between the input layer and the output layer. A signal propagates in the order of the input layer, the hidden layer, and the output layer. Each layer of the input layer, the hidden layer, and the output layer is composed of one or more units. The units between the layers are connected to each other, and each unit has an activation function (for example, a sigmoid function, a rectified linear function, a softmax function, etc.). A weighted sum is calculated based on multiple inputs to the unit, and a value of the activation function to which the weighted sum is input is set as the output of the unit.

For example, the first label calculation unit 251 and the second label calculation unit 253 adjust weights when calculating the weighted sum in each unit among the parameters defining the neural network. Then, the first label calculation unit 251 and the second label calculation unit 253 minimize the error between the output of the neural network and the classification data. Maximum likelihood estimation method or the like can be applied to minimize the error related to the output of the neural network for a plurality of teacher data.

To minimize the error related to the output of the neural network, for example, the first label calculation unit 251 and the second label calculation unit 253 may use Gradient descent method, Stochastic gradient descent method, or the like. The first label calculation unit 251 and the second label calculation unit 253 may use Error back propagation method for gradient calculation by Gradient descent method or Stochastic gradient descent method.

In machine learning by the neural network, generalization performance (discrimination ability for unknown data) and overfitting (phenomenon in which generalization performance does not improve while conforming to teacher data) can be a problem.

Therefore, in creating the learning models in the first label calculation unit 251 and the second label calculation unit 253, a method such as Regularization that restricts the degree of freedom of weights at the time of learning may be used to alleviate overfitting. In addition, a method such as Dropout that probabilistically selects units in the neural network and invalidates other units may be used. Furthermore, to improve generalization performance, methods such as Data Regularization, Data Standardization, and Data Expansion that eliminate bias in teacher data may be used.

Next, "estimation" in the first label calculation unit 251 and the second label calculation unit 253 will be described.

The first label calculation unit 251 estimates the classification label for an image whose classification label is unknown by using the first model generated by the first teacher data. That is, the first label calculation unit 251 inputs the image to the first neural network representing the first model, and calculates the output of the first neural network. Then, the output of the first neural network is used as the first label (classification label estimated by the first model).

The second label calculation unit 253 estimates the classification label for the image whose classification label is unknown by using the second model generated by the second teacher data. That is, the second label calculation unit 253 inputs the image to the second neural network representing the second model, and calculates the output of the second neural network. Then, the output of the second neural network is used as the second label (classification label estimated by the second model).

The estimation based on the second model tend to be more computationally expensive than the estimation based on the first model. On the other hand, the estimation based on the second model tends to enable finer estimation than the estimation based on the first model. The reason for this is that, as compared with the first model, in the second model, the calculation regarding the characteristic portion of the object included in the image is performed.

Which of the first label and the second label is set as the classification label for the image to which the classification label is not set is determined by processes of the determination unit 255 and the classification label set unit 257 described below.

The first label calculation unit 251 may use the first model to estimate the classification label for the classified image and may calculate the correct answer rate of the first model. That is, the first label calculation unit 251 may set a label calculated based on the classified image and the first model as a reproduction label, and may calculate a percentage of matching of the reproduction label and the classification label of the classified image, for each classification label of the classified image. Here, the percentage of matching is set as the correct answer rate. The correct answer rate is calculated for each classification label of the classified image.

The correct answer rate described above indicates the degree to which the first model reproduces the first teacher data. The correct answer rate represents the probability that the classification label corresponding to the input classified image is output as the reproduction label when the classified image is input to the first neural network representing the first model.

In addition, the first label calculation unit 251 may set the classification label of the classified image whose correct answer rate is equal to or less than a predetermined threshold value as the predetermined label. The predetermined label may be set based on the correct answer rate, or may be arbitrarily set by the user of the image classification device 20. The method of setting the predetermined label is not limited to the example given here.

The reason for setting the predetermined label is to construct the second teacher data by using the first teacher data having less reproduction by the first model.

To improve the situation where the estimation accuracy is low when estimating the classification label for an image whose classification label is unknown using the first model, the classification label for the image whose classification label is unknown is estimated using the second model.

The determination unit 255 determines whether the first label calculated by the first label calculation unit 251 is the predetermined label. Then, the result of the determination is output to the classification label set unit 257. The determination unit 255 may control the second label calculation unit 253 to calculate the second label when the first label calculated by the first label calculation unit 251 is the predetermined label.

The classification label set unit 257 sets one of the first label and the second label as the classification label for the image for which the classification label is not set, based on the determination result by the determination unit 255. Specifically, when the first label is not the predetermined label, the classification label set unit 257 sets the first label as the classification label. On the other hand, when the first label is the predetermined label, the classification label set unit 257 sets the second label as the classification label.

### [Procedure of image classification]

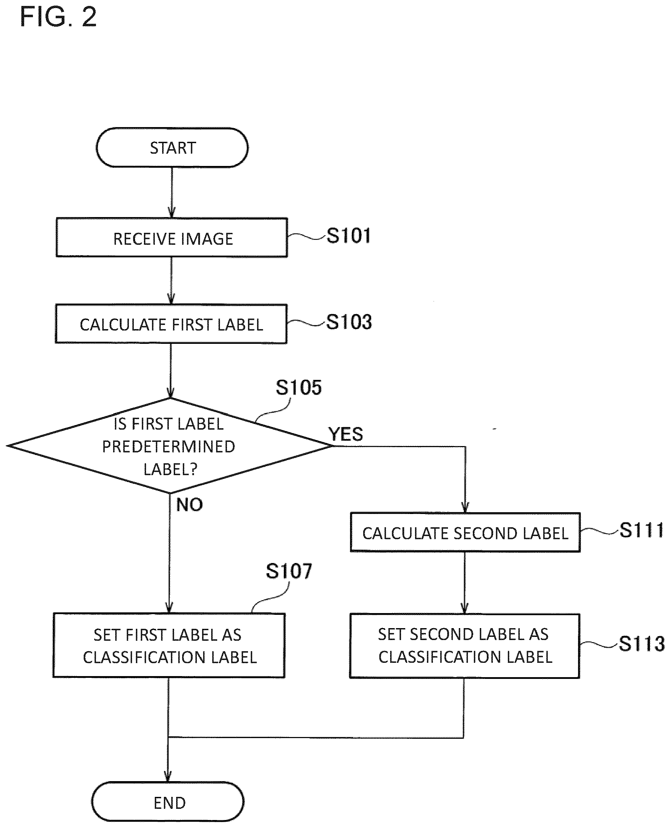

Next, the procedure of image classification in the image classification device according to the present disclosure will be described with reference to the flowchart of Fig. 2.

The processing of the flowchart shown in Fig. 2 is started when the user activates the image classification device. It is assumed that the first model and the second model have already been generated at the time when the image classification by the image classification device is started.

In step S101, the receiver 21 receives the image of the object captured by the imaging device 10.

In step S103, the first label calculation unit 251 calculates the first label based on the image and the first model. That is, the first label calculation unit 251 inputs the image to the first neural network representing the first model, and calculates the output of the first neural network. Then, the output of the first neural network is used as the first label.

In step S105, the determination unit 255 determines whether the first label calculated by the first label calculation unit 251 is the predetermined label.

If it is determined in step S105 that the first label is not the predetermined label (NO in step S105), the process proceeds to step S107, and the classification label set unit 257 sets the first label as the classification label for the image.

On the other hand, if it is determined in step S105 that the first label is the predetermined label (YES in step S105), the process proceeds to step S111, and the second label calculation unit 253 calculates the second label based on the image and the second model. That is, the second label calculation unit 253 inputs the image to the second neural network representing the second model, and calculates the output of the second neural network. Then, the output of the second neural network is used as the second label.

After that, in step S113, the classification label set unit 257 sets the second label as the classification label for the image.

After performing the processing in step S107 or step S113, the procedure of image classification shown in Fig. 2 ends.

As a result of the processing in step S107 or step S113, the classification label is estimated for the image whose classification label is unknown, and one of the first label and the second label is set as the classification label.

### [Effect of embodiment]

As described in detail above, the image classification device, the image classification method, and the image classification program according to the present disclosure determine a classification label of an image obtained by capturing an image of an object, based on a first model and a second model. Here, the first model is a model generated based on a first teacher data which is a set of a classified image and the classification label of the classified image. The second model is a model generated based on a second teacher data which is a set of the classified image, the classification label of the classified image, and a region set in the classified image. The image classification device, the image classification method, and the image classification program calculate a first label based on the image and the first model, and determine whether the first label is a predetermined label. Then, when the first label is not the predetermined label, the image classification device, the image classification method, and the image classification program set the first label as the classification label of the image. On the other hand, when the first label is the predetermined label, the image classification device, the image classification method, and the image classification program calculate a second label based on the image and the second model, and set the second label as the classification label of the image.

As a result, it is possible to automate the classification work of images captured by an object and reduce the work time and cost in the classification work.

In particular, according to the present disclosure, rough estimation of the image is performed based on the first model, which has a lower calculation cost than the second model. Then, fine estimation is performed using the second model for images that cannot be sufficiently classified by coarse estimation. Therefore, the calculation cost in the classification work can be reduced.

Further, as a result of the automation of the classification work, it is possible to shorten the time required for the classification work of the captured images acquired for the maintenance and inspection of the machine having a large number of components. Furthermore, it is not necessary to train workers who are proficient in the work of classifying captured images.

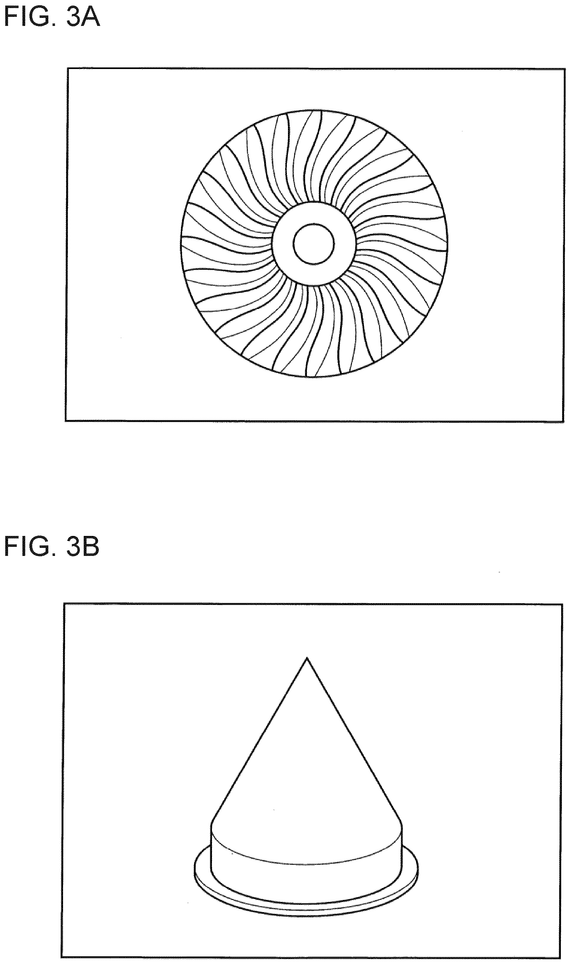

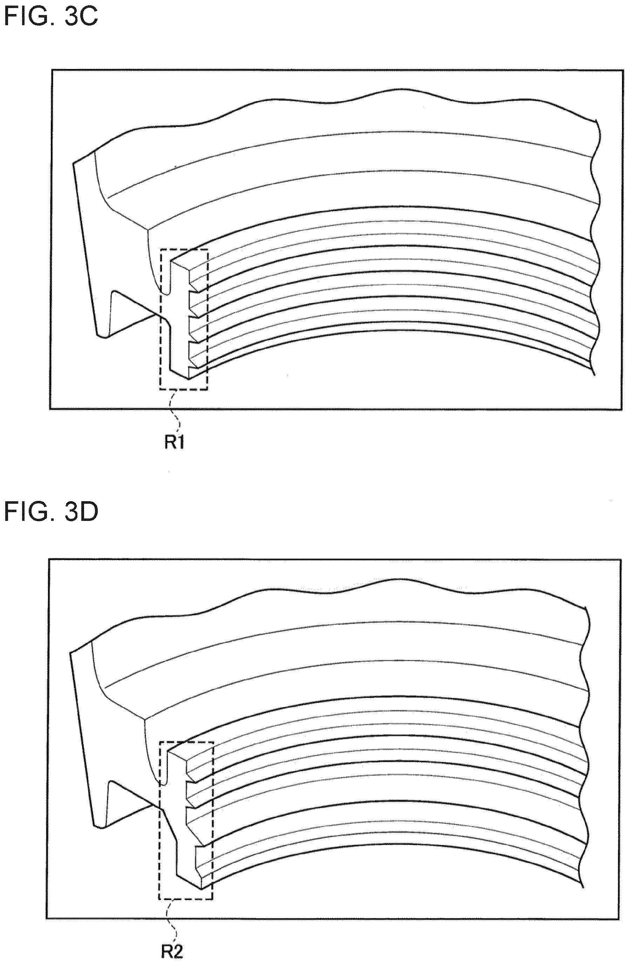

For example, the aircraft engine is composed of, for example, components as shown in Figs. 3A, 3B, 3C, and 3D. The fan rotor shown in Fig. 3A and the inlet cone shown in Fig. 3B are significantly different in appearance from the inner shrouds shown in Figs. 3C and 3D. Therefore, by rough estimation based on the first model, it can be estimated that the component included in Fig. 3A is the fan rotor, and the component included in Fig. 3B is the inlet cone.

According to the rough estimation based on the first model, it can be estimated that the components included in Figs. 3C and 3D is the inner shroud. However, it is difficult to distinguish between the first inner shroud included in Fig. 3C and the second inner shroud included in Fig. 3D.

Therefore, for example, a "first inner shroud" and a "second inner shroud" are set as the predetermined labels, and the components included in Figs. 3C and 3D are estimated separately from each other by detailed estimation based on the second model.

When the second model is generated, the region R1 is set in the image in which the first inner shroud is included in the second teacher data as shown in Fig. 3C. Further, in the image in which the second inner shroud is included, the region R2 is set as shown in Fig. 3D. Therefore, according to the detailed estimation based on the second model, the components included in Figs. 3C and 3D can be estimated separately from each other.

The names of the components constituting the aircraft engine are not limited to the above-mentioned examples. Further, the setting of the predetermined label is not limited to the above-mentioned example.

The second model may be a model generated only based on the second teacher data in which the classification label of the classified image is the predetermined label. As a result, the second model becomes a model specialized in the classification of images that cannot be sufficiently classified by the classification based on the first model. As a result, it is possible to improve the accuracy of classification for images that cannot be sufficiently classified by the rough estimation by the first model. Furthermore, the learning time based on the second teacher data can be shortened.

The classification label of the classified image whose correct answer rate is equal to or less than a predetermined threshold value may be set as the predetermined label. Here, a label calculated based on the classified image and the first model is set as a reproduction label, and a percentage of matching of the reproduction label and the classification label of the classified image may be set as the correct answer rate. Here, the percentage of matching is calculated for each classification label of the classified image.

As a result, it is possible to perform fine estimation using the second model for images that cannot be sufficiently classified by coarse estimation by the first model. Since the predetermined model is automatically set based on the correct answer rate, the work of setting the predetermined model by the user can be omitted. As a result, the work time and cost in the classification work can be reduced.

The first model may be a model generated by machine learning based on the first teacher data. This makes it possible to make a rough estimation of the image. In addition, it is possible to shorten the learning time for a sufficiently classified image by rough estimation based on the first model.

The region may be a region of the image, in which a characteristic portion of the object is included. This makes it possible to improve the classification accuracy by fine estimation by the second model.

The second model may be a model that estimates the region from the image using a detection algorithm. This allows the second model to make finer estimates than the first model.

The detection algorithm may include at least one of Faster R-CNN (Regions with Convolutional Neural Networks), YOLO (You Only Look None), SSD (Single Shot MultiBox Detector, and Semantic Segmentation. This allows the second model to make finer estimates than the first model.

The object may be a component constituting a machine. As a result, it is possible to shorten the time required for sorting the captured images acquired for maintenance and inspection of a machine having a large number of components. Furthermore, it is not necessary to train workers who are proficient in the work of classifying captured images.

The machine may be, for example, an aircraft engine. As a result, it is possible to shorten the time required for sorting the captured images acquired for maintenance and inspection of an aircraft engine having a large number of components. Furthermore, it is not necessary to train workers who are proficient in the work of classifying captured images.

Respective functions described in the present disclosure may be implemented by one or plural processing circuits. The processing circuits include programmed processing devices such as a processing device including an electric circuit and include devices such as an application specific integrated circuit (ASIC) and conventional circuit elements that are arranged to execute the functions described in the present disclosure.

According to the present disclosure, it is possible to automate the classification work of images of similar components, and it is possible to reduce the work time and cost in the classification work. Thus, for example, it is possible to contribute to Goal 12 of the United Nations-led Sustainable Development Goals (SDGs): "Ensure sustainable consumption and production patterns."

It goes without saying that the present disclosure includes various embodiments not described here. Therefore, the technical scope of the present disclosure is defined only by the matters relating to the reasonable claims from the above description.

This application claims priority based on Japanese Patent Application No. 2020-088815 filed on May 21, 2020, and the entire content of this application is incorporated herein by reference.

### REFERENCE SIGNS LIST

- 10: imaging device
- 20: image classification device
- 21: receiver
- 25: controller
- 251: first label calculation unit
- 253: second label calculation unit
- 255: determination unit
- 257: classification label set unit

## Claims

1. An image classification device including:
a receiver configured to receive an image of an object, and
a controller configured to determine a classification label of the image, based on a first model and a second model, wherein
the first model is a model generated based on a first teacher data which is a set of a classified image and the classification label of the classified image,
the second model is a model generated based on a second teacher data which is a set of the classified image, the classification label of the classified image, and a region set in the classified image, and
the controller is configured
to calculate a first label based on the image and the first model,
to determine whether the first label is a predetermined label,
to set the first label as the classification label of the image when the first label is not the predetermined label,
to calculate a second label based on the image and the second model and set the second label as the classification label of the image when the first label is the predetermined label.

2. The image classification device according to claim 1, wherein
the second model is a model generated only based on the second teacher data in which the classification label of the classified image is the predetermined label.

3. The image classification device according to claim 1 or 2, wherein
a label calculated based on the classified image and the first model is set as a reproduction label,
a percentage of matching of the reproduction label and the classification label of the classified image is set as the correct answer rate, the percentage of matching is calculated for each classification label of the classified image, and
the classification label of the classified image whose correct answer rate is equal to or less than a predetermined threshold value is set as the predetermined label.

4. The image classification device according to any one of claims 1 to 3, wherein the first model is a model generated by machine learning based on the first teacher data.

5. The image classification device according to any one of claims 1 to 4, wherein the region is a region of the image, in which a characteristic portion of the object is included.

6. The image classification device according to any one of claims 1 to 5, wherein the second model is a model that estimates the region from the image using a detection algorithm.

7. The image classification device according to claim 6, wherein
the detection algorithm includes at least one of Faster R-CNN (Regions with Convolutional Neural Networks), YOLO (You Only Look None), SSD (Single Shot MultiBox Detector, and Semantic Segmentation.

8. The image classification device according to any one of claims 1 to 7, wherein the object is a component constituting a machine.

9. The image classification device according to claim 8, wherein
the machine is an aircraft engine.

10. An image classification method for determining a classification label of an image of an object, based on a first model and a second model, wherein
the first model is a model generated based on a first teacher data which is a set of a classified image and the classification label of the classified image, and
the second model is a model generated based on a second teacher data which is a set of the classified image, the classification label of the classified image, and a region set in the classified image,
the image classification method comprising:
calculating a first label based on the image and the first model,
determining whether the first label is a predetermined label,
setting the first label as the classification label of the image when the first label is not the predetermined label,
calculating a second label based on the image and the second model and setting the second label as the classification label of the image when the first label is the predetermined label.

11. A non-transitory computer-readable storage medium storing a program for causing a computer to execute processing for determining a classification label of an image of an object, based on a first model and a second model, wherein
the first model is a model generated based on a first teacher data which is a set of a classified image and the classification label of the classified image, and
the second model is a model generated based on a second teacher data which is a set of the classified image, the classification label of the classified image, and a region set in the classified image,
the processing comprising:
calculating a first label based on the image and the first model,
determining whether the first label is a predetermined label,
setting the first label as the classification label of the image when the first label is not the predetermined label,
calculating a second label based on the image and the second model and setting the second label as the classification label of the image when the first label is the predetermined label.

## Amended claims

### Amended claims under Art. 19.1 PCT

**1.** An image classification device including:
a receiver configured to receive an image of an object, and
a controller configured to determine a classification label of the image, based on a first model and a second model, wherein
the first model is a model generated based on a first teacher data which is a set of a classified image and the classification label of the classified image,
the second model is a model
generated based on a second teacher data which is a set of the classified image, the classification label of the classified image, and a region set in the classified image, and
generated only based on the second teacher data in which the classification label of the classified image is a predetermined label, and
the controller is configured
to calculate a first label based on the image and the first model,
to determine whether the first label is the predetermined label,
to set the first label as the classification label of the image when the first label is not the predetermined label,
to calculate a second label based on the image and the second model and set the second label as the classification label of the image when the first label is the predetermined label.

**2.** The image classification device according to claim 1, wherein
a label calculated based on the classified image and the first model is set as a reproduction label,
a percentage of matching of the reproduction label and the classification label of the classified image is set as the correct answer rate, the percentage of matching is calculated for each classification label of the classified image, and
the classification label of the classified image whose correct answer rate is equal to or less than a predetermined threshold value is set as the predetermined label.

**3.** The image classification device according to claim 1 or 2, wherein
the first model is a model generated by machine learning based on the first teacher data.

**4.** The image classification device according to any one of claims 1 to 3, wherein
the region is a region of the image, in which a characteristic portion of the object is included.

**5.** The image classification device according to any one of claims 1 to 4, wherein
the second model is a model that estimates the region from the image using a detection algorithm.

**6.** The image classification device according to claim 5, wherein
the detection algorithm includes at least one of Faster R-CNN (Regions with Convolutional Neural Networks), YOLO (You Only Look None), SSD (Single Shot MultiBox Detector, and Semantic Segmentation.

**7.** The image classification device according to any one of claims 1 to 6, wherein
the object is a component constituting a machine.

**8.** The image classification device according to claim 7, wherein
the machine is an aircraft engine.

**9.** An image classification method for determining a classification label of an image of an object, based on a first model and a second model, wherein
the first model is a model generated based on a first teacher data which is a set of a classified image and the classification label of the classified image, and
the second model is a model
generated based on a second teacher data which is a set of the classified image, the classification label of the classified image, and a region set in the classified image, and
generated only based on the second teacher data in which the classification label of the classified image is a predetermined label,
the image classification method comprising:
calculating a first label based on the image and the first model,
determining whether the first label is the predetermined label,
setting the first label as the classification label of the image when the first label is not the predetermined label,
calculating a second label based on the image and the second model and setting the second label as the classification label of the image when the first label is the predetermined label.

**10.** A non-transitory computer-readable storage medium storing a program for causing a computer to execute processing for determining a classification label of an image of an object, based on a first model and a second model, wherein
the first model is a model generated based on a first teacher data which is a set of a classified image and the classification label of the classified image, and
the second model is a model
generated based on a second teacher data which is a set of the classified image, the classification label of the classified image, and a region set in the classified image, and
generated only based on the second teacher data in which the classification label of the classified image is a predetermined label,
the processing comprising:
calculating a first label based on the image and the first model,
determining whether the first label is the predetermined label,
setting the first label as the classification label of the image when the first label is not the predetermined label,
calculating a second label based on the image and the second model and setting the second label as the classification label of the image when the first label is the predetermined label.
